# FASCICULE DE BREVET EUROPEEN

(11) **EP 0 730 997 B1**
(45) Date de publication et mention de la délivrance du brevet: **04.08.1999**
(21) Numéro de dépôt: 96400469.1
(22) Date de dépôt: 05.03.1996
(51) Int. Cl.: B60R 13/02, F16B 21/08

(54) **Pièce décorative en matière plastique**
Dekoratives Teil aus Kunststoff
Decorative port made of plastic

(30) Priorité: 06.03.1995 FR 9502577
(43) Date de publication de la demande: 11.09.1996
(73) Titulaire: PEGUFORM FRANCE, 01100 Oyonnax (FR)
(72) Inventeur: Dobkess, Jacques, 01590 Dortan (FR); Goguet, Patrick, 95800 Cergy le Haut (FR)
(74) Mandataire: Martin, Jean-Jacques

(56) Documents cités:
- DE-A- 1 929 325
- FR-A- 2 505 419
- FR-A- 2 536 128
- US-A- 2 565 636
- US-A- 4 683 622

## Description

La présente invention concerne la construction automobile et, plus précisément, la fixation de pièces en matière plastique sur les carrosseries de véhicules automobiles.

De telles pièces sont de plus en plus utilisées, notamment dans un but esthétique, pour assurer la continuité de forme entre différentes pièces de carrosserie et/ou organes de véhicules automobiles ; un exemple typique est constitué par les barreaux de calandre qui se trouvent interposés entre le capot, le pare-chocs et les projecteurs. L'invention s'applique à des pièces de forme allongée, typiquement de longueur supérieure à lm50, qui sont fixées sur le véhicule aux deux extrémités. Ces pièces sont montées sur la chaîne d'assemblage et fixées à leurs deux extrémités par des vis ou par clipsage ; elles comportent en général des pièces de type pattes ou languettes coulissant dans des lumières ménagées dans la carrosserie, pour assurer leur aplomb et leur maintien en position au cours du montage, en empêchant leur basculement.

Une pièce décorative ayant les caractéristiques du préambule de la revendication 1 est décrite dans le document FR-A-2 505 419.

On peut citer aussi les bandeaux décoratifs utilisés à d'autres emplacements qui possèdent également cette structure allongée et une fixation en deux points d'extrémité.

Jusqu'à ces dernières années, de telles pièces étaient réalisées en des matériaux cristallins ou thermodurcissables qui possèdent une bonne tenue mécanique, une bonne dureté, et qui sont peu déformables sous l'effet des variations de température.

Mais, ces matières plastiques sont relativement chères et la tendance récente est d'utiliser des matériaux thermoplastiques amorphes ou semi-cristallins dont l'exemple type est le polypropylène, dans ses diverses nuances.

Lorsque l'on veut passer des matières classiques aux matières thermoplastiques amorphes ou semi-cristallines, on rencontre un problème dû au fait que les nouveaux matériaux sont thermiquement déformables, alors même que le cahier des charges des constructeurs prévoit des normes de dilatation maximale à l'ensoleillement qui imposent à la pièce fixée à ses deux extrémités de ne pas se déformer au-delà de deux contours-enveloppes extrêmes.

S'agissant de pièces linéaires, la solution mécanique au problème de dilatation serait de libérer la pièce au moins à une extrémité en remplaçant la fixation par une liaison offrant une certaine possiblité de glissement.

Mais, il apparaît qu'un jeu de glissement se traduirait, pour la position rétractée de la pièce, par l'apparition d'un intervalle visible qui interromprait ostensiblement la continuité entre la pièce plastique et la carrosserie, ce qui est inacceptable pour des raisons esthétiques.

La présente invention propose une solution à ce problème.

Plus précisément, l'invention concerne une pièce décorative de forme allongée en matière thermoplastique, pour véhicule automobile, du type comportant des moyens de fixation à chacune de ses extrémités, et des pattes de maintien en place au montage susceptibles de coopérer avec des lumières homologues ménagées dans la carrosserie.

Elle est caractérisée par le fait que lesdites pattes sont munies à leur extrémité de moyens de clipsage susceptibles de coopérer avec des ouvertures ménagées dans lesdites lumières, moyens de clipsage et ouvertures associées étant disposés et arrangés de telle sorte qu'il existe un jeu de clipsage susceptible de contenir et répartir la dilatation de la pièce, une dilatation linéaire étant transformée par la retenue du clipsage en déformation volumique confinée entre deux contours extrêmes.

Ainsi, se trouve préservée l'apparence esthétique extérieure du véhicule, malgré les différences dans la dilatation des tôles de véhicules et de la pièce thermoplastique.

De préférence, les pattes de maintien comportent à leur extrémité des agrafes métalliques de clipsage.

De telles agrafes sont connues en elles-mêmes. Le document FR-A-2 536 128 décrit une telle agrafe clipsée sur une patte d'un panneau et s'engageant dans une fente ménagée dans un support ; il en résulte une certaine possibilité de jeu, mais qui ne vise pas à contenir et répartir la dilatation de pièces allongées comme défini ci-dessus.

Dans une réalisation de l'invention, chaque agrafe comporte une pince présentant deux branches reliées entre elles à l'avant, l'une des branches étant reliée à l'arrière à une platine comportant des moyens de fixation sur la patte de maintien. Avantageusement, lesdits moyens de fixation comportent une languette formant saillie obliquement sur une face de la platine, et deux crochets ouverts en direction de la platine, formant saillie sur la platine du côté de ladite languette, ces crochets étant conformés pour s'engager sur la patte de maintien, ladite languette étant apte à se rabattre élastiquement dans le plan de la platine au contact de la patte de maintien lors de l'engagement des crochets sur cette dernière. Chaque patte de maintien présente un logement disposé de sorte qu'au terme de la course d'engagement des crochets sur celle-ci, ladite languette s'engage dans ledit logement en reprenant sa forme initiale, pour retenir l'agrafe sur ladite patte de maintien.

D'autres caractéristiques et avantages de l'invention apparaîtront à la lumière de la description qui va suivre et du dessin annexé sur lequel :
- la figure 1 montre en section transversale un barreau de calandre, avant et après montage sur un véhicule automobile,
- la figure 2 est une vue schématique définissant le comportement de dilatation du barreau dans différentes situations de température et d'ensoleillement,
- la figure 3 représente le barreau équipé d'un joint d'étanchéité,
- la figure 4 est une vue en perspective du barreau, partielle, illustrant le montage d'une agrafe de clipsage sur une patte de maintien,
- la figure 5 représente en perspective une patte de maintien faisant partie du barreau, coiffée d'une agrafe de clipsage,
- la figure 6 est une section transversale partielle montrant de façon schématique l'agrafe de clipsage après introduction dans une lumière homologue ménagée dans la carrosserie,
- les figures 7A et 7B sont deux représentations en perspective d'une agrafe de clipsage, selon deux angles de vue différents,
- la figure 8 est une vue de dessus d'une agrafe de clipsage, et
- la figure 9 montre en section transversale une variante de réalisation d'un barreau de calandre équipé d'agrafes de clipsage telles que représentées sur les figures précédentes.

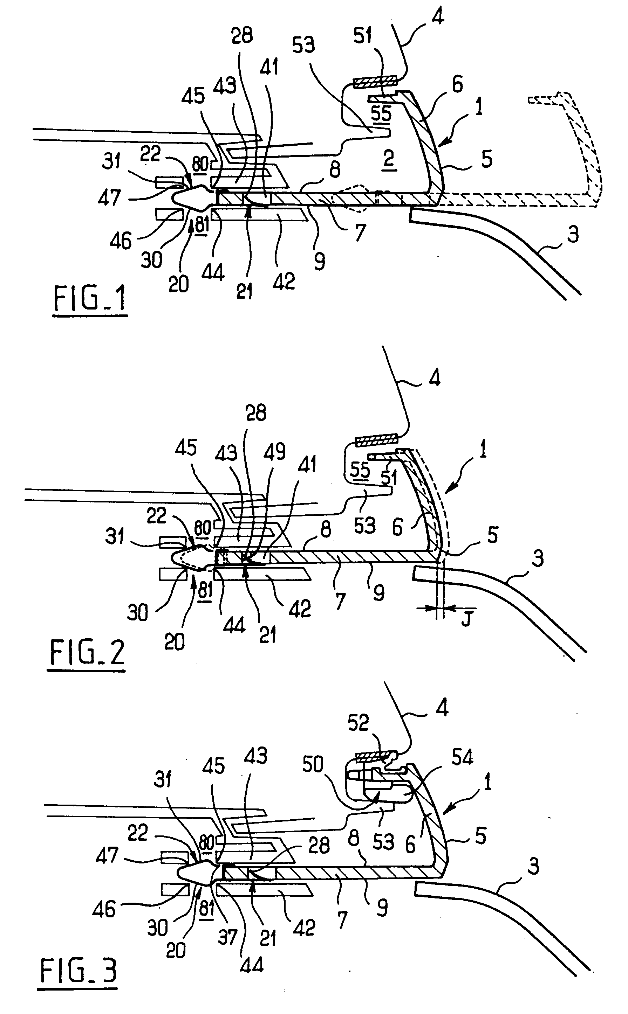

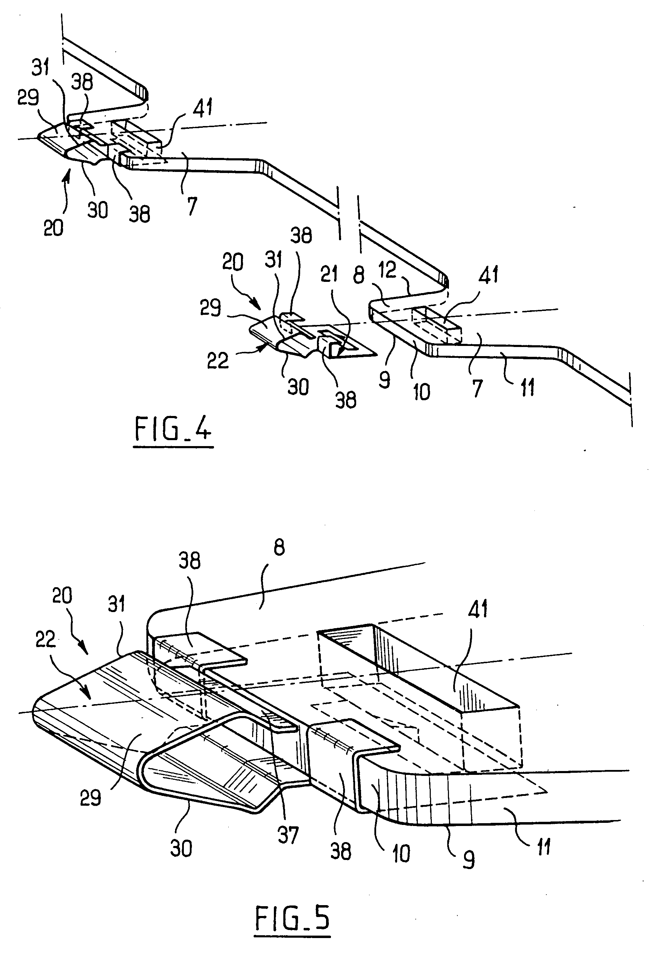

Le barreau de calandre 1 représenté sur les figures 1 à 3 est à engager lors du montage dans un espace de réception 2 du véhicule, situé entre un élément inférieur 3 de carrosserie, tel qu'un pare-chocs, et un élément supérieur 4 de carrosserie, tel qu'un projecteur ou le capot. Le barreau 1 comporte une paroi 6 en matière thermoplastique amorphe ou semi-cristalline, avantageusement du polypropylène, qui définit une face externe 5 légèrement convexe vers l'extérieur, s'étendant après le montage du barreau 1 dans le prolongement de la surface externe des éléments 3 et 4 de carrosserie pour conférer l'aspect esthétique souhaité au véhicule. La paroi 6 est prolongée inférieurement, du côté opposé à la face externe 5, par des pattes de maintien au montage 7, venues de formation par moulage avec la paroi 6, et réparties sur la longueur du barreau 1. Dans la description qui suit, les termes "avant" et "arrière" se réfèrent à la direction d'introduction, par l'avant, des pattes de maintien dans les lumières homologues ménagées sur la carrosserie du véhicule. On a représenté sur la figure 4 deux pattes de maintien 7. Chacune est délimitée, supérieurement et inférieurement par deux faces principales 8, 9 planes et parallèles et, latéralement, par une surface latérale de génératrice perpendiculaire au plan des faces principales 8 et 9. Chaque patte de maintien 7 présente, en vue de dessus, c'est-à-dire observée dans une direction perpendiculaire au plan des faces principales 8 et 9, un contour sensiblement trapézoïdal, délimité par un bord avant 10 rectiligne et généralement parallèle à un plan tangent à la surface externe 5 du barreau 1 au niveau du raccordement de la patte de maintien 7 sur la paroi 6, et par deux bords latéraux 11, 12 convergeant légèrement en direction du bord avant 10.

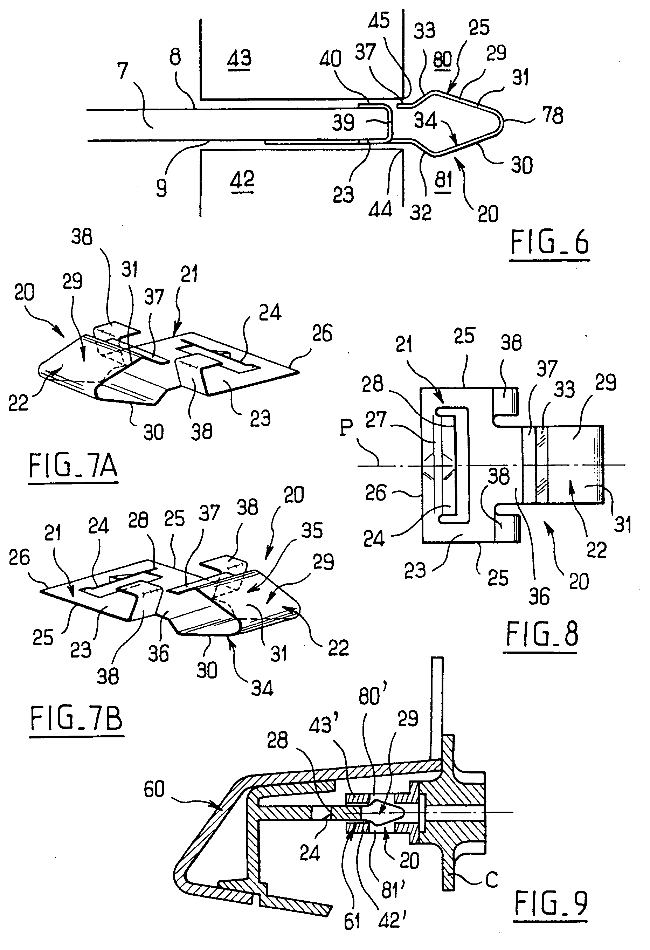

Une agrafe de clipsage 20 est rapportée sur chaque patte de maintien 7. Chaque agrafe 20 est formée par découpage et pliage d'un flan métallique, présente une partie arrière 21 pour sa fixation sur la patte de maintien 7 et une partie avant 22, à engager par l'avant dans une lumière correspondante prévue sur la carrosserie du véhicule, cette lumière présentant des ouvertures agencées pour coopérer avec la partie avant 22 de sorte que l'agrafe 20 est retenue par clipsage au terme du montage dans ladite lumière. L'agrafe 20 représentée sur la figure 8 est symétrique par rapport à un plan médian P, perpendiculaire au plan de cette figure.

Comme représenté plus particulièrement sur les figures 7A et 7B, la partie arrière 21 comporte une platine 23 sur laquelle est découpée une languette 24 s'étendant obliquement vers l'avant et vers le haut, et formant saillie sur la face supérieure de la platine 23. Cette dernière est délimitée latéralement par deux bords 25 parallèles entre eux, reliés à l'arrière par un bord 26 perpendiculaire aux bords latéraux 25. La ligne de pliage 27 de la languette 24, de même que son bord libre 28, s'étendent parallèlement au bord arrière 26. La platine 23 est prolongée à l'avant par une pince élastique 29, constituant la partie avant 22 précitée de l'agrafe 20. Cette pince 29 présente des branches inférieure 34 et supérieure 35 réunies à leur extrémité avant par une portion cintrée 78 de manière à pouvoir fléchir élastiquement en rapprochement l'une de l'autre au contact des bords de la lumière de la carrosserie recevant la pince 29. Les branches 34, 35 sont généralement convexes vers l'extérieur ; plus précisément, les branches 34, 35 présentent des portions divergeant vers l'avant, respectivement référencées 32, 33, et des portions convergeant vers l'avant, respectivement référencées 30, 31, situées dans le prolongement des portions 32, 33. La portion divergente 32 de la branche inférieure 34 se raccorde à une avancée 36 de la platine 23, et la portion divergente 33 de la branche supérieure 35 est prolongée vers l'arrière par une partie plane 37 s'étendant parallèlement au plan de la platine 23, en vis-à-vis de l'avancée 36. Les arêtes formées à la jonction des portions 30, 32 et 31, 33 se situent à l'aplomb l'une de l'autre. L'arête formée à la jonction de la portion 33 et de la partie plane 37, et l'arête formée à la jonction de l'avancée 36 et de la portion 32 se situent également dans un même plan, perpendiculaire au plan de la platine 23. Dans l'exemple décrit, les portions convergentes 30, 31 font entre elles un angle de 19° au repos, et chacune un angle de 19° avec le plan de la platine 23. Les portions divergentes 32, 33 font chacune un angle de 40° environ avec le plan de la platine 23. La largeur de la pince 29, mesurée dans une direction perpendiculaire au plan médian de symétrie P, est inférieure à la largeur de la platine 23, et deux crochets 38 sont formés de part et d'autre de la pince 29. Chaque crochet 38 est ouvert vers l'arrière et réalisé par double pliage à angle droit d'une languette prolongeant vers l'avant la platine 23, cette languette étant pliée une première fois autour d'une première ligne de pliage contenue dans le plan de la platine 23 et parallèle au bord arrière 26, et une deuxième fois autour d'une deuxième ligne de pliage située à l'aplomb de la première, du côté de la face de la platine 23 sur laquelle la languette 24 fait saillie. Chaque crochet 38 présente ainsi un montant 39 s'étendant perpendiculairement au plan de la platine 23 et une portion d'extrémité 40 se raccordant perpendiculairement au montant 39 et s'étendant parallèlement au plan de la platine 23 vers l'arrière, comme représenté plus particulièrement sur la figure 6. La largeur d'ouverture d'un crochet 38, c'est-à-dire la distance séparant la portion d'extrémité 40 du plan de la platine 23, correspond à l'épaisseur d'une patte de maintien 7. Un logement 41, de forme rectangulaire, allongé selon une direction parallèle au bord avant 10, est ménagé sur chaque patte de maintien 7 pour l'ancrage de la languette 24 lors de la mise en place de l'agrafe 20 sur la patte de maintien 7.

Le montage d'une agrafe 20 sur une patte de maintien 7 s'effectue en engageant les crochets 38 de l'agrafe 20 sur le bord avant 10 jusqu'à insertion de la languette 24 dans le logement 41 et appui de l'arête 28 contre la paroi 49 du logement 41 située du côté du bord avant 10. Le métal dans lequel est réalisée l'agrafe 20 est avantageusement choisi de manière à ce que la languette 24 puisse se déformer élastiquement en se rabattant dans le plan de la platine 23 au contact de la face principale 9 de la patte de maintien 7 lors de l'engagement des crochets 38 sur cette dernière puis, en reprenant sa forme initiale au terme de la course d'engagement des crochets 38, pénétrer dans le logement 41 pour prendre appui sur la paroi 49 de ce dernier et retenir l'agrafe 20 sur la patte de maintien 7.

Des ouvertures 80, 81 sont ménagées dans les lumières associées aux pattes de maintien 7 pour recevoir les branches 34, 35 des pinces 29 des agrafes de clipsage 20 au terme de l'insertion de ces dernières. Dans l'exemple de réalisation représenté sur les figures 1 à 3, ces ouvertures 80 et 81 sont ménagées sur des parois 42 et 43 de la carrosserie, s'étendant parallèlement et dont l'écartement correspond sensiblement à l'épaisseur d'une patte de maintien 7 augmentée de l'épaisseur de la platine 23 et de celle d'une portion d'extrémité 40 d'un crochet 38. Lors du montage du barreau 1, les branches 34, 35 de chaque pince 29 se déforment en rapprochement l'une de l'autre au contact des parois 42, 43 pour permettre le franchissement par la pince 29 de la région des parois 42 et 43 située entre les bords de ces dernières contre lesquels la pince 29 vient en contact au début de son engagement et les ouvertures 80, 81. L'emplacement des ouvertures 80 et 81 est choisi de sorte que, lorsque la face externe 5 est correctement positionnée, les branches 34, 35 ont repris une configuration proche de ou identique à celle qu'elles occupent au repos et font respectivement saillie dans les ouvertures 80, 81.

Les ouvertures 80, 81 sont délimitées par des arêtes respectives 44, 45 situées à l'aplomb l'une de l'autre et contre lesquelles prennent appui les portions divergentes 32, 33 des branches 34, 35 pour s'opposer au retrait de la patte de maintien 7 correspondante, et par des arêtes respectives 46, 47 formant butée de fin de course d'insertion pour la pince 29. Lorsqu'une patte de maintien 7 est enfoncée au-delà de sa course normale d'insertion dans la lumière homologue, c'est-à-dire est déplacée vers la gauche depuis sa position représentée sur la figure 2, les portions convergentes 30, 31 de la pince 29 viennent en butée contre les arêtes 46, 47 et tendent à s'opposer à l'enfoncement de la pince 29.

Le barreau 1 est avantageusement muni, comme représenté sur la figure 3, d'un joint d'étanchéité 50 en matériau élastomère. Ce joint 50 est monté sur un rebord 51 du barreau 1, prolongeant supérieurement la paroi 6, du côté opposé à la face externe 5, et s'étendant parallèlement au plan des pattes de montage 7 sur la longueur du barreau 1. Le joint 50 est reçu dans une gorge 55 de l'élément supérieur 4 de carrosserie, présentant en section transversale la forme d'un U couché dont les flancs s'étendent parallèlement aux pattes de maintien 7 lorsque ces dernières sont en place. La gorge 55 est ouverte dans la direction opposée à la direction d'introduction des pattes de maintien 7. Le joint 50 présente supérieurement une lèvre 52 conformée pour s'appliquer continûment sur le flanc supérieur de la gorge 55, et inférieurement un bourrelet 54 conformé pour reposer sur le flanc inférieur 53 de la gorge 55.

Le barreau 1 comporte à ses extrémités axiales, non représentées, des moyens de fixation sur la carrosserie du véhicule, par boulonnage ou par clipsage par exemple. Le montage du barreau 1 s'effectue en engageant les pattes de maintien 7 dans les lumières homologues prévues sur la carrosserie, jusqu'à clipsage des agrafes 20 dans les ouvertures 80, 81, puis en fixant les extrémités axiales du barreau 1 sur la carrosserie.

Lorsque le barreau 1 est soumis à des contraintes mécaniques internes en raison des variations de température et des différences de dilatation entre le barreau 1 et les tôles de la carrosserie du véhicule, le barreau 1 qui est fixé à ses extrémités axiales tend, en se déformant, à provoquer un enfoncement ou un retrait des pattes de maintien 7 des lumières correspondantes de la carrosserie. Chaque pince 29, en prenant appui par les portions convergentes 30, 31 des branches 34, 35 contre les arêtes 46, 47 des ouvertures 80, 81, tend à exercer un effort de rappel élastique à l'encontre d'un enfoncement de la patte de maintien 7 au-delà d'une position de repos qu'occupe le barreau à une température moyenne. Chaque pince 29, en prenant appui par les portions divergentes 32, 33 des branches 34, 35 contre les arêtes 44, 45 des ouvertures 80, 81, tend à exercer un effort de rappel élastique à l'encontre du retrait de la patte de maintien 7 hors de ladite position de repos. Les efforts de rappel ci-dessus, exercés par les pinces 29 des agrafes 20 dont sont munies à leur extrémité les pattes de maintien 7, contiennent et répartissent conformément à l'invention la dilatation de la pièce, en transformant une dilatation linéaire en une déformation volumique confinée entre deux contours extrêmes. Le jeu entre ces contours extrêmes est limité à une valeur J (voir la figure 2) suffisamment faible (de l'ordre de 1 à 2 mm) pour ne pas affecter l'aspect esthétique du véhicule. Lorsqu'il est nécessaire de démonter le barreau 1, les branches 34, 35 des pinces 29 peuvent se déformer en rapprochement l'une de l'autre pour autoriser le dégagement des ouvertures 80, 81 lorsqu'une traction est exercée sur les pattes de maintien 7. Comme les portions divergentes 32, 33 sont plus pentues que les portions convergentes 30, 31, l'effort à exercer pour retirer une pince 29 est supérieur à l'effort nécessaire pour le clipsage. Le démontage de la pièce s'effectue sans rupture.

Bien entendu, l'invention n'est pas limitée à l'exemple de réalisation qui vient d'être décrit, et s'applique à toute pièce décorative de forme allongée en matière thermoplastique. On a représenté, à titre d'exemple, sur la figure 9, un barreau de calandre 60 de forme différente. Dans cette réalisation, les pinces 29 sont reçues dans des supports 61 fixés par vissage ou rivetage sur des bossages de la carrosserie C du véhicule. Chaque support 61 comporte deux parois 42', 43' dans lesquelles sont ménagées des ouvertures respectives 80' et 81' pour recevoir les branches 34 et 35, de façon analogue à ce qui a été précédemment décrit.

## Revendications

1. Pièce décorative (1) de forme allongée en matière thermoplastique, pour véhicule automobile, du type comportant des moyens de fixation à chacune de ses extrémités, et des pattes (7) de maintien en place au montage susceptibles de coopérer avec des lumières homologues (42, 43) ménagées dans la carrosserie, caractérisée en ce que chaque patte (7) est munie à son extrémité de moyens de clipsage (20) susceptibles de coopérer avec des ouvertures (80, 81) ménagées dans la lumière homologue (42, 43), moyens de clipsage (20) et ouvertures associées (80, 81) étant disposés et arrangés de telle sorte qu'il existe un jeu de clipsage (J) susceptible de contenir et répartir la dilatation de la pièce, une dilatation linéaire étant transformée par la retenue du clipsage en déformation volumique confinée entre deux contours extrêmes.

2. Pièce selon la revendication 1, caractérisée en ce que chaque patte de maintien (7) comporte à son extrémité une agrafe métallique (20) de clipsage.

3. Pièce selon la revendication 2, caractérisée en ce que ladite agrafe (20) comporte une pince (29) à introduire par l'avant dans la lumière homologue, cette pince (29) présentant deux branches (34, 35) reliées entre elles à l'avant (78), l'une (34) des branches étant reliée à l'arrière à une platine (23) comportant des moyens de fixation (24) sur la patte de maintien (7).

4. Pièce selon la revendication 3, caractérisée en ce que lesdits moyens de fixation (24) comportent une languette formant saillie obliquement sur une face de la platine (23), et deux crochets (38) ouverts en direction de la platine, formant saillie sur la face de la platine située du côté de ladite languette, lesdits crochets (38) étant conformés pour s'engager sur la patte de maintien (7), ladite languette (28) étant apte à se rabattre élastiquement dans le plan de la platine (23) au contact de la patte de maintien lors de l'engagement des crochets (38) sur la patte de maintien, cette dernière présentant un logement (41) disposé de sorte qu'au terme de la course d'engagement des crochets (38) sur la patte de maintien (7), ladite languette (24) s'engage dans ledit logement (41) en reprenant sa forme initiale, pour retenir l'agrafe (20) sur la patte de maintien (7).

5. Pièce selon l'une des revendications 3 et 4, caractérisée en ce que lesdites branches (34, 35) présentent deux portions divergeant (32, 33) puis deux portions convergeant (30, 31) en rapprochement de l'extrémité (78) par laquelle les branches sont reliées.

6. Pièce selon la revendication 5, caractérisée en ce que lesdites portions divergentes (32, 33) forment chacune au repos un angle de 40° environ avec le plan de la platine (23).

7. Pièce selon l'une des revendications 5 et 6, caractérisée en ce que lesdites portions convergentes (30, 31) forment chacune au repos un angle de 19° environ avec le plan de la platine (23).

8. Pièce selon l'une des revendications 2 à 7, caractérisée en ce que chaque agrafe (20) est conformée de manière à ce que la force à appliquer à la patte de maintien (7) pour provoquer le retrait de l'agrafe est supérieure à la force à exercer pour le clipsage de l'agrafe (20) dans les ouvertures associées.

9. Pièce selon l'une des revendications 2 à 7, caractérisée en ce que chaque agrafe (20) est conformée de manière à permettre un démontage par simple traction vers l'extérieur de la pièce sans rupture.

10. Pièce selon l'une des revendications 1 à 9, caractérisée en ce que ladite matière thermoplastique est du polypropylène.

## Claims

1. An elongate piece of trim (1) of thermoplastics material for a motor vehicle, the piece being of the type comprising fixing means at each of its ends and holding lugs (7) for holding it in place on mounting, the lugs being suitable for cooperating with corresponding slots (42, 43) formed in the bodywork, the piece being characterized in that each lug (7) is provided at its end with snap-fastening means (20) suitable for co-operating with openings (80, 81) formed in the corresponding slots (42, 43), the snap-fastening means (20) and the corresponding openings (80, 81) being disposed and arranged in such a manner that snap-fastening clearance (J) exists that is suitable for accommodating and distributing the expansion of the piece, linear expansion being transformed by the snap-fastening retention into volume deformation confined between two end outlines.

2. A piece according to claim 1, characterized in that each holding lug (7) has a metal snap-fastening clip (20) at its end.

3. A piece according to claim 2, characterized in that said clip (20) has a crook-shaped end (29) for inserting forwards into the corresponding slot, said crook (29) having two limbs (34, 35) interconnected at the front end (78), one of the limbs (34) being connected at its rear end to a plate (23) having fixing means (24) for fixing it to the holding lug (7).

4. A piece according to claim 3, characterized in that said fixing means (24) comprise a tongue projecting obliquely from one of the faces of the plate (23) and two hooks (38) that are open towards the plate, projecting from the same face of the plate as said tongue, said hook (38) being shaped to engage on the holding lug (7), said tongue (28) being suitable for returning resiliently into the plane of the plate (23) in contact with the holding lug while the hooks (38) are being engaged on the holding lug, the lug having a recess (41) disposed so that at the end of the stroke for engaging the hooks (38) on the holding lug (7), said tongue (24) engages in said recess (41) by returning to its initial shape for the purpose of holding the clip (20) on the holding lug (7).

5. A piece according to claim 3 or 4, characterized in that, on going towards the end (78) where said limbs (34, 35) are united, the limbs have two diverging portions (32, 33) followed by two converging portions (30, 31).

6. A piece according to claim 5, characterized in that, at rest, each of said diverging portions (32, 33) forms an angle of about 40° with the plane of the plate (23).

7. A piece according to claim 5 or 6, characterized in that, at rest, each of said converging portions (30, 31) forms an angle of about 19° with the plane of the plate (23).

8. A piece according to any one of claims 2 to 7, characterized in that each clip (20) is shaped so that the force that needs to be applied to the holding lug (7) to cause the clip to be removed therefrom, is greater than the force that needs to be exerted for snap-fastening the clip (20) in the associated openings.

9. A piece according to any one of claims 2 to 7, characterized in that each clip (20) is shaped in such a manner as to enable disassembly to be performed without breakage, merely by pulling the piece outwards.

10. A piece according to any one of claims 1 to 9, characterized in that said thermoplastic material is polypropylene.

## Patentansprüche

1. Dekoratives Teil (1) mit länglicher form aus thermoplastischem Material, für Automobile, mit Befestigungseinrichtungen an jedem seiner Enden und mit Laschen (7) zum Festlegen während der Montage, wobei die Laschen in der Lage sind, mit in der Karosserie ausgebildeten homologen Ausnehmungen (42, 43) zusammenzuwirken, dadurch gekennzeichnet, daß jede Lasche (7) an ihrem Ende mit Clipeinrichtungen (20) versehen ist, die in der Lager sind, mit Öffnungen (80, 81) in den homologen Ausnehmungen (42, 43) zusammenzuwirken, wobei die Clipeinrichtungen (20) und die zugehörigen Öffnungen (80, 81) derart angeordnet und ausgebildet sind, daß ein Clip-Spiel (J) besteht, das in der Lage ist, die Ausdehnung des Teils aufzunehmen und zu verteilen, wobei eine lineare Ausdehnung durch die Clip-Befestigung in eine Volumenverformung umgesetzt wird, die durch zwei Extremkonturen begrenzt ist.

2. Teil nach Anspruch 1, dadurch gekennzeichnet, daß jede Haltelasche (7) an ihrem Ende eine metallische Clip-Klammer (20) aufweist.

3. Teil nach Anspruch 2, dadurch gekennzeichnet, daß die Klammer (20) eine Klemme (29) aufweist, die mit der Vorderseite in die homologe Ausnehmung eingeführt wird, wobei diese Klemme (29) zwei Schenkel (34, 35) aufweist, die an der Vorderseite (78) miteinander verbunden sind, wobei einer der Schenkel (34) am hinteren Ende mit einer Platte (23) verbunden ist, die Einrichtungen (24) zum Befestigen an der Haltelasche (7) aufweist.

4. Teil nach Anspruch 3, dadurch gekennzeichnet, daß die Befestigungseinrichtungen (24) eine schräg von der einen Fläche der Platte (23) abstehende Zunge und zwei in Richtung der Platte offene Haken (38) aufweist, die von der zungenseitigen Fläche der Platte abstehen, wobei die Haken (38) zum Angreifen an der Haltelasche (7) ausgebildet sind, wobei die Zunge (28) in der Lage ist, sich beim Kontakt mit der Haltelasche elastisch auf die Ebene der Platte (23) abzusenken, wenn die Haken (38) an der Haltelasche angreifen, wobei letztere eine Aufnahme (41) aufweist, die derart angeordnet ist, daß am Ende des zum Angreifen der Haken (38) an der Haltelasche (7) zurückzulegenden Weges, die Zunge (24) in die Aufnahme (41) eingreift, indem sie ihre ursprüngliche Form wieder einnimmt, um die Klammer (20) an der Haltelasche (7) zu halten.

5. Teil nach einem der Ansprüche 3 und 4, dadurch gekennzeichnet, daß die Schenkel (34, 35) zwei sich voneinander entfernende Bereiche (32, 33) und zwei in Annäherung an das Ende (78), an dem die Schenkel miteinander verbunden sind, konvergierende Bereiche (30, 31) aufweisen.

6. Teil nach Anspruch 5, dadurch gekennzeichnet, daß die sich voneinander entfernenden Bereiche (32, 33) in der Ruhestellung jeweils einen Winkel von ungefähr 40° mit der Ebene der Platte (23) bilden.

7. Teil nach einem der Ansprüche 5 und 6, dadurch gekennzeichnet, daß die konvergierenden Bereiche (30, 31) in der Ruhestellung jeweils einen Winkel von ungefähr 19° mit der Ebene der Platte (23) bilden.

8. Teil nach einem der Ansprüche 2 bis 7, dadurch gekennzeichnet, daß jede Klammer (20) derart ausgebildet ist, daß die zum Herausziehen der Klammer auf die Haltelasche (7) aufzubringende Kraft größer ist als die zum Einstecken der Klammer (20) in die zugehörigen Öffnungen erforderliche Kraft.

9. Teil nach einem der Ansprüche 2 bis 7, dadurch gekennzeichnet, daß jede Klammer (20) derart ausgebildet ist, daß das Teil durch einfaches Zeihen des Teils nach außen ohne Zerreißen demontierbar ist.

10. Teil nach einem der Ansprüche 1 bis 9, dadurch gekennzeichnet, daß das thermoplastische Material Polypropylen ist.
